# EUROPEAN PATENT SPECIFICATION

(11) **EP 3 361 419 B1**
(45) Date of publication and mention of the grant of the patent: **08.03.2023**
(21) Application number: 18155564.0
(22) Date of filing: 07.02.2018
(51) Int. Cl.: G06K 19/06, G06K 7/10

(54) **TAMPER-PROOF BARCODE, SYSTEM AND METHOD FOR GENERATING AND AUTHENTICATING CREDENTIALS ON THE BASIS OF SAID CODE**
MANIPULATIONSSICHERER STRICHCODE, SYSTEM UND VERFAHREN ZUM GENERIEREN UND AUTHENTIFIZIEREN VON BERECHTIGUNGEN AUF BASIS EINES SOLCHEN CODES
CODE BARRES INFALSIFIABLE, SYSTÈME ET MÉTHODE POUR GÉNÉRER ET AUTHENTIFIER LES AUTORISATIONS SUR LA BASE DU DIT CODE

(30) Priority: 09.02.2017 IT 201700014359
(43) Date of publication of application: 15.08.2018
(73) Proprietor: AITEK S.P.A., 16100 Genova (IT)
(72) Inventor: PORCILE, Andrea, 16121 GENOVA (IT); FERRARI, Fabrizio, 16147 GENOVA (IT)
(74) Representative: Karaghiosoff, Giorgio Alessandro

(56) References cited:
- GB-A- 2 478 712
- US-A1- 2005 248 471

## Description

The present invention relates to a bar code, in particular of the two-dimensional type named QR.

QR codes are two-dimensional bar codes, i.e. matrix-shaped or 2D-shaped, which can encode a large amount of information, up to 7,089 numeric characters or 4296 alphanumeric characters, in a black and white image composed of black modules arranged within a square-shaped diagram.

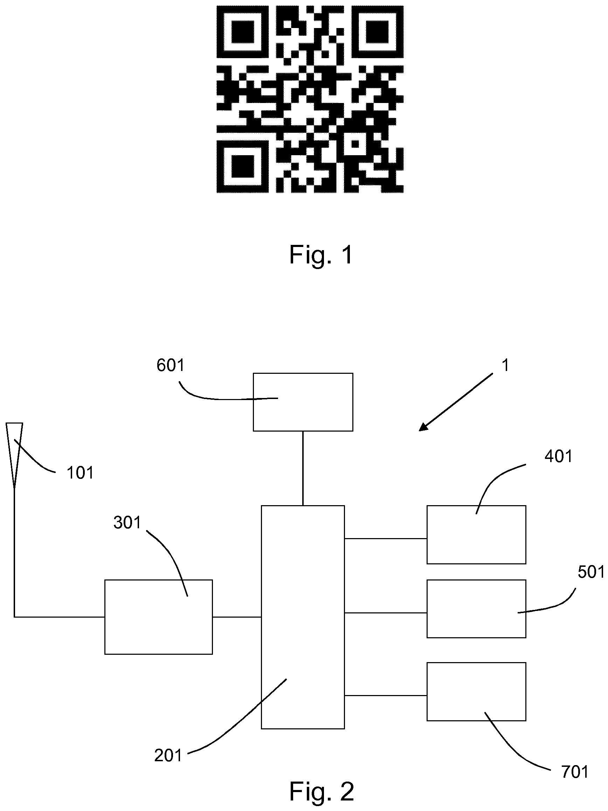

The acronym QR derives from Quick Response, by virtue of the fact that a reading device decodes the code very quickly. Fig. 1 shows an example of a QR code that encodes the owner's URL http://www.aitek.it.

For further technical details concerning the QR and related generating and reading tools reference should be made to the ISO/IEC 18004 standard and the Denso Wave Corporation Patent Documents such as, for example, JP2938338, JP2867904, JP3716527, JP3726395, JP3843595, JP3996520, US5726435, US5691527, US7032823.

QR codes are particularly recommended in the field of distribution of dematerialized access and/or qualification securities due to both the high capacity of encoding information contents and the reading speed. The QR code, by its nature, is very suitable for the distribution on mobile devices such as smartphones.

The weak point of the use of QR codes in the field of the dematerialization of ieecurities is linked to the ease of generating illegal copies, whereby the institution issuing the security is forced to implement centralized validation policies able to keep track of the readings made by the validating machines scattered throughout the territory so as to detect any attempts to use illicit copies.

Fig. 2 shows a block diagram of a typical mobile terminal 1 used for reading and validating a security purchased by a user and shown as QR, for example via the display of his/her own smartphone, to a service operator or provider.

The terminal 1 comprises an antenna 101 for transmitting and receiving data from a remote unit or server in order to validate the security, a control unit 201, a transmitter/receiver circuit 301 which interfaces the control unit 201 with the antenna 101, a bar code reader 401 such as a scanner or a camera for reading QR codes, a memory 501 containing data and instructions for the operation of the control unit, a display 601 for displaying the user interface of the terminal and a power-supply unit 701. The control unit 201 is programmed for decoding the security contained in the QR code and validating the same by carrying out a comparison with what is on the remote management server via the circuit 301 and the antenna 101. If the security is not yet used, it can be validated and crossed off the server so as to prevent a second use thereof.

Although this procedure is functional, it is particularly tricky and, above all, involves the need to communicate with a remote validation server and this is not always possible. Consider, for example, a railway or subway context, particularly in underground line-stretches, which most of the time can not provide reliable and powerful wireless communication.

GB2478712A discloses an authorisation system which comprises a transaction processing terminal for processing transactions; and a mobile user device, the user device comprising means for receiving information relating to a particular transaction from the processing terminal, and means for generating a user code to authorize a transaction in dependence upon the received information, wherein the user code is adapted to be received by the processing terminal thereby to enable the processing terminal to process the transaction. The process for card holder present transactions comprises the merchant scanning goods and presenting via a barcode the transaction reference, merchant id and amount. The customer scans the barcode and depending on the amount enters a PIN into the smart phone. The smartphone generates a one time activation code and card number via an on screen barcode and the merchant scans the barcode and processes the transaction. A dynamic activation code may be generated based on a clock signal and a preinstalled random seed key. The system may also be used to control access or authorize provision of service.

US2005248471A1 discloses a method and an apparatus for displaying a time-varying code to a handheld terminal, and a method and an apparatus for approval and authentication processing by using the same, which is able to read in machine and which is the one dimensional and second dimensional code that recording a prescribed information, which is the shape, position, the tone of color, light and darkness of code pattern or the combination of that variable in accordance with time, which is the time-varying code for authentication that is able to read in machine in spite of the variation of code pattern, is provided. Also, the system for reading and displaying in the handheld terminal a time-varying code for authentication, a time-varying code system for authentication that is including the server, handheld terminal and reading machine, is provided.

Object of the present invention is to provide a bar code, in particular two-dimensional and of QR type, having anti-counterfeiting characteristics and not requiring validation through remote servers.

A further object is to implement devices able to generate and read said code for the management of secure transactions between a providing institution and a user, as well as systems and methods for generating and authenticating a security on the basis of said code.

The invention achieves its purpose with a dynamic graphic code, which is a bar code or a QR code and which shows the combination of features according to independent claim 1.

Typically, the dynamic key is variable over time with a predetermined frequency based on a previously defined security algorithm, said key being recreated by comparing several codes sequentially generated for the same information of interest, determining from said comparison the variations over time, identifying and recreating the algorithm reversed with respect to the security algorithm and finally, through the application of said reversed algorithm, determining the dynamic key.

Thanks to this, the code takes a unique connotation and, therefore, does not require validation by a remote server, as only the owner of the original security is able to generate this dynamic code. As we will see later, in some embodiments there can still be such a server, in order to increase the security level of transactions.

According to an aspect, the invention relates to a device for generating the aforementioned dynamic graphic code comprising the combination of features of independent claim 3.

The piece of information in the code typically comprises a sequence of fixed characters or symbols, whereas the dynamic key comprises a time-varying sequence of characters or symbols. The output codes represent, in encoded way, a string comprising the sequence of the characters or symbols of the piece of information and the characters or symbols of the key arranged in predefined positions with respect to each other.

According to another aspect, the invention relates to a device for reading the dynamic graphic code according to the combination of features of claim 5.

As far as concerned, the variable key can be in the form of a key of an encryption algorithm to encrypt information strings.

The invention also relates to a system according to claims 7 to 9 for generating and authenticating a security represented by a sequence of alphanumeric characters and/or symbols which comprises the aforesaid devices, as well as a method for generating and authenticating said security according to claims 10 to 12.

According to an embodiment, the system comprises a generating terminal and a validation terminal, in which the generating terminal, typically a smartphone, a tablet, a personal computer or the like, comprises:
- means to receive the security from a providing institution;
- a device for encoding the security and outputting a sequence of dynamic codes according to the invention,
wherein the authentication terminal comprises:
- means to receive the code sequence from the generating terminal;
- a device for reading the codes and extracting the security according to the invention.

The invention further relates to a method for generating a dynamic bar code representing, in encoded manner, a security formed by a sequence of alphanumeric characters and/or symbols, the method comprising the combination of steps according to claims 10 to 12 .

According to an embodiment, there is provided a method for the authentication of a security expressed in the form of code sequences, comprising the steps of:
- receiving the code sequences;
- decoding the contents of each code;
- storing said contents as decoded in the form of strings of characters or symbols;
- comparing at least one subset of consecutive stored strings to identify the variable key in the codes based on a predefined algorithm;
- extracting the string containing the security through the reversed application of the predefined algorithm with the variable key for example to delete the characters or symbols that constitute the key as identified by at least one of the stored strings or else to decrypt the string previously encrypted by an encryption algorithm based on said variable key;
- showing at the output the string containing the security;
- in case validating the security.

Further characteristics and improvements are object of the sub-claims.

The characteristics of the invention and the advantages descending therefrom will become more apparent from the following detailed description of the accompanying drawings, in which:
Fig. 1 shows an example of QR code representing the URL http://www.aitek.it.
Fig. 2 shows the block diagram of a reading and authentication terminal to read and authenticate a QR code according to the known art.
Fig. 3a shows an example of alphabetical string representing a security.
Fig. 3b shows the string of the preceding figure as altered by the dynamic key at 5:27:35 p.m. in an illustrative example.
Fig. 3c shows the same string of figure 3 as altered by the dynamic key at 5:27:36 p.m.
Fig. 4 shows, in table-form, how the strings and the corresponding QR codes appear as time varies according to the configuration of the examples shown in the preceding figures.
Fig. 5 shows a block diagram of a system for generating and authenticating a security according to an embodiment of the invention comprising a generating terminal and a validation terminal.
Fig. 6 shows a block diagram of a system according to another embodiment of the invention.
Fig. 7 shows the block diagram of the generating terminal of the system of figs. 7 and 8.
Fig. 8 shows the block diagram of the validation terminal of the system of figs. 7 and 8.

The process of generating and managing the securities according to the present invention involves the following sub-processes:
- issuing the security;
- generating the dynamic code based on the issued security. Hereinafter, the code is also defined EQR Code, i.e. Enhanced QR Code;
- validating the EQR Code;
- validating the security.

### ISSUE OF THE SECURITY

The sub-process of issuing the security is an operation on responsibility of the providing institution and is strongly dependent on the offer, management and security policies the providing institution intends to adopt.

For the purposes of the present invention the security generated by the system of the providing institution can only be defined as a generic string represented by a sequence of alphanumeric characters and/or symbols.

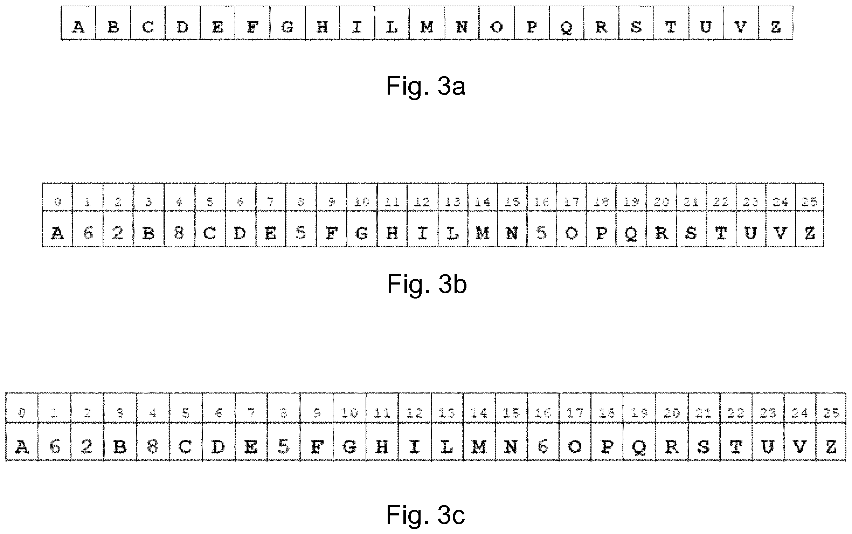

Suppose, by way of example, that the representative string of the security is the one shown in fig. 3a.

The system of issuing the security must electronically transfer the string to an App, defined by way of example EQR-App, located on the smartphone or notebook or tablet of the user who purchased the security.

### GENERATION OF THE EQR CODE BASED ON THE ISSUED SECURITY

The EQR-App receives the string representing the security and processes the same according to an enforcement algorithm that produces a new string varying over time: the new string is none other than the original string increased by one or more enforcement fields constituting the real variable component of the EQR Code.

By way of example, suppose that the enforcement algorithm provides the generation of the enforcement string as the number of seconds elapsed since today midnight, i.e. a string varying between "00000" (corresponding to 00:00:00) and "86399 "(at 11:59:59 p.m.); suppose further that the algorithm provides for introducing the enforcement string to the offsets 1, 2, 4, 8 and 16.

At 5:27:35 p.m. the enforcement string is "62855" which, if inserted according to the algorithm in the string of fig. 3a, produces the string shown in fig. 3b.

After a second the enforcement string will be "62856" which produces the string shown in fig. 3c.

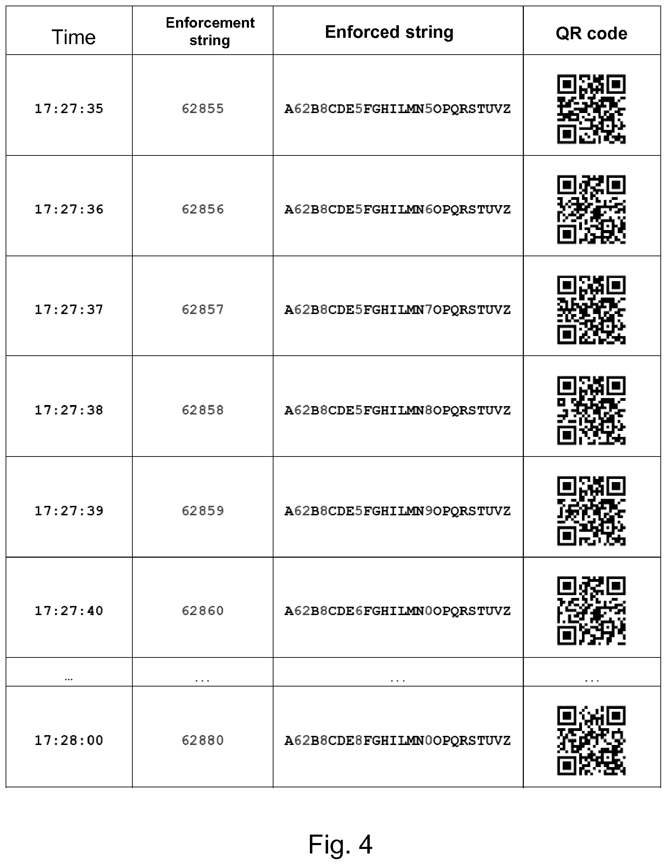

A different QR code corresponds to each enforced string; in the example we would have, as time passes, the situation shown in fig. 4.

Therefore, the EQR-App produces an animated image: each frame is a QR code that lasts on the screen for 1 sec, by virtue of the selected enforcement algorithm.

The enforcement algorithm can be as complex as desired, provided that it complies with the time-variance characteristic (regardless of the frequency of variation) and is unequivocally known to EQR-App and validation devices or applications.

### VALIDATION OF THE EQR CODE

The validation of the EQR Code requires multiple QR to be acquired. At each QR reading the validation device has to extract from the code
the enforcement string and the security string. The EQR can be validated if the enforcement string varies over time according to the enforcement algorithm and the security string is always the same.

### VALIDATION OF THE SECURITY

The validation of the security extracted from the EQR Code, as described in the previous paragraph, follows the validation policies selected by the institution issuing/managing the security itself. For example, the providing institution can be notified, not necessarily in real time, for example via email, of the use of the code representing the issued security in order to allow the providing institution to close the transaction. In order to increase the security level, the successful validation of the security can be communicated in real time to the provider as in traditional systems, so as to mark the security as no longer usable. In the same way, before carrying out the validation, the actual validity of the security can be verified with the providing institution, obviously if the communication between the verifier and the institution is possible.

A possible use of the EQR codes is related to bank cards, i.e. debit and credit cards.

### EQR ATM

To withdraw money from an ATM, that we will define of EQR type, a user must activate the EQR code generation on his portable device (such as a smartphone). The generation process is activated upon request to enter a security code, such as a PIN, on the mobile device. The user, still through the portable device, specifies the amount he/she wants to withdraw. The EQR encrypts both the identification data of the user required for the transaction and the desired amount.

The ATM becomes a device for simply reading and verifying the EQR code, thus making the transaction much safer.

### EQR POS

Similarly to what described for the example of the ATM, the EQR code can be used to create a new credit card format.

The EQR POS is enabled from the outside (for example by a cash register) to charge a certain amount of money, and gets ready for reading and verifying an EQR credit card. The user activates on his/her own portable device (for example a smartphone) the generation of the EQR credit card, after entering a security code (for example a PIN) and shows the EQR to the POS that reads and verifies the EQR credit card before performing the normal operations of security validation and financial transaction.

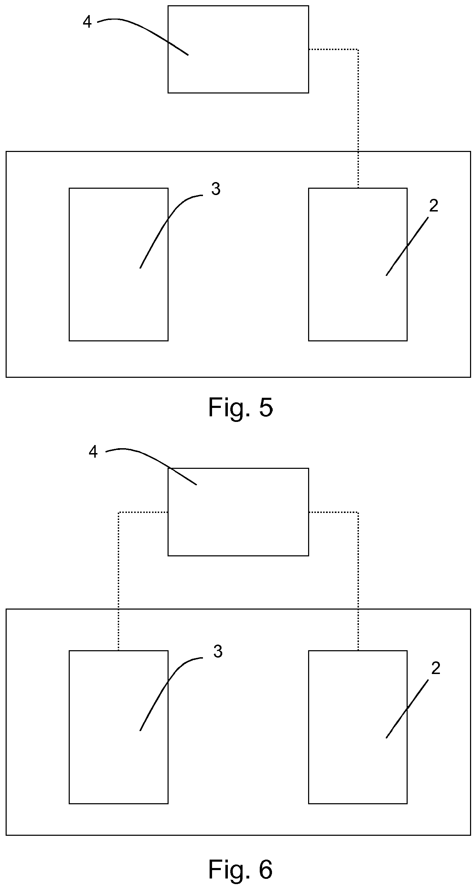

Referring to figure 5, a system for generating and authenticating a security according to an embodiment of the invention is now described. The generating 2 and authenticating 3 parts are shown together, but as evident each of them can be an independent device or terminal for generating and reading, respectively, a dynamic bar code containing an encoded piece of information according to the invention. The two devices within the scope of the present description are also referred to as the generating terminal and validation terminal.

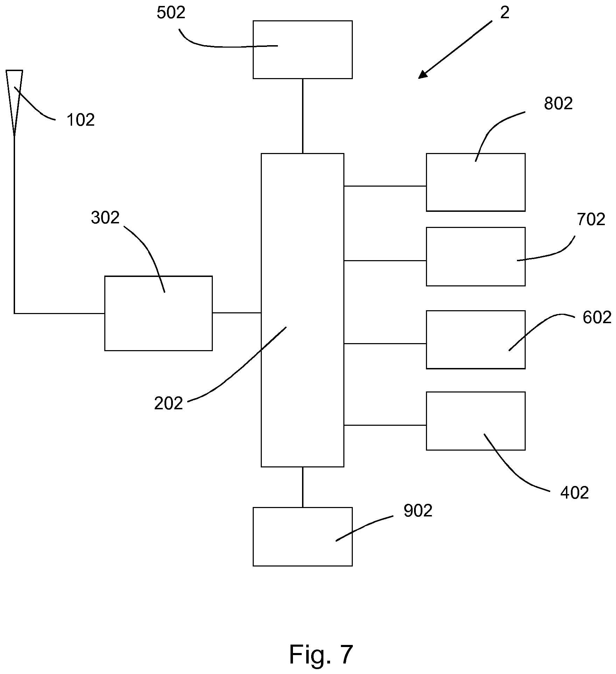

Referring to fig. 7, the generating terminal 2, typically a smartphone, a tablet, a personal computer or the like, comprises an antenna 102 for transmitting and receiving data from a remote unit or server 4 to receive a security from a providing institution, a microprocessor control unit or microcontroller 202, a transmitter/receiver circuit 302 which interfaces the control unit 202 with the antenna 102, a memory 402 containing data and instructions for the operation of the control unit 202, a display 502 for displaying the user interface of the terminal and the generated QR codes, a power source such as a power-supply unit or a battery 602, a timing unit such as a timer or counter 702, a unit for generating the dynamic key 802 and an encoding unit 902 to encode strings in QR codes.

The generating terminal 2 operates as follows. The user purchases the security by connecting to the server of the provider 4 via the GSM network or the Internet. The control unit 202 receives the string representing the security. The generating unit 802, interfaced with the timing unit 702, generates a time-varying dynamic key. The same generating unit 802 or the control unit 202 incorporates the dynamic key in the security string at predefined positions thus generating a plurality of sequenced strings. Then, the encoding unit 902 generates a QR code per each string and shows them on the display after storage, if needed, for example in any video format, in order to be able to show the security as encoded to a verifier or a store where goods corresponding to the purchased security have to be collected.

To help understand the teachings of the present invention, the timing unit 702, the dynamic key generating unit 802 and the encoding unit 902 are shown in the figure as separate, but one or more hardware or software modules may be part of the microprocessor control unit or they may be interfaced, or partially interfaced, with said microprocessor unit that executes specific instructions of a program or an app contained inside the memory 402.

In an embodiment, the control unit 202 can be configured to carry out, through a routine or an app, the following steps:
reading the string that represents the security as received by the providing institution;
generating a time-varying dynamic key according to a predetermined algorithm;
generating strings comprising the sequence of both the characters or symbols of the security and the characters or symbols of the key arranged at predefined positions with respect to each other;
encoding the strings into sequence of two-dimensional bar codes, such as QR codes or the like.

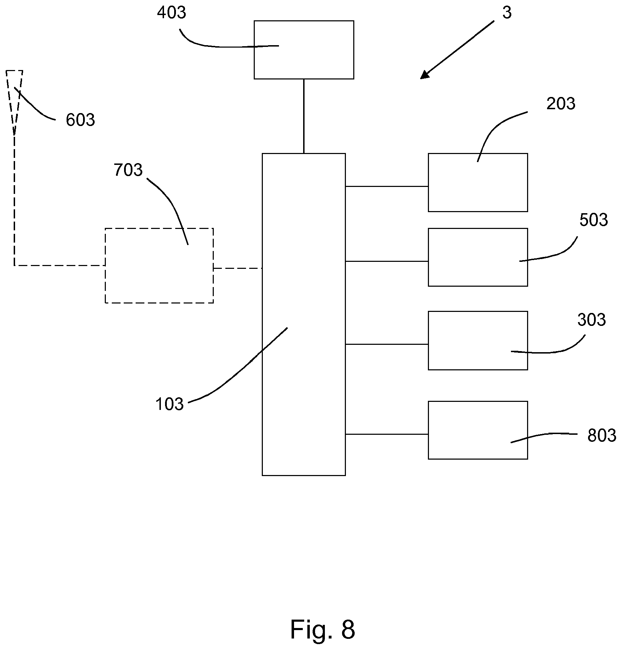

Now the structure of the validation terminal 3 shown in fig. 8 will be seen.

The validation terminal 3, typically a smartphone, a tablet, a personal computer, a POS or the like, comprises a microprocessor control unit or microcontroller 103, a bar code reader 203, such as a video camera for reading multiple sequenced QR codes, a memory 303 containing the read code sequences and instructions for the operation of the control unit, a display 403 for displaying the user interface of the terminal and a power source such as a power-supply unit or a battery 503. As in the case of the generating terminal, there may be an antenna 603 and a transmitting/receiving circuit 703 both drawn in broken lines in the figure, but these never take part in the validation process to validate the security except in the case of an embodiment having a further increased security level described below with reference to the system of fig. 6, in which the validation terminal 3 is expected to interact with the server 4 of the providing institution.

A specially-made unit for decoding the read code 803 may be provided, or the security may be advantageously extracted from the code sequence input to the reader 203 by the same control unit.

In an embodiment the control unit 103 is configured to:
- receive code sequences outputted by the reader 203;
- decode the contents of each code;
- store said contents as decoded in the form of strings of characters or symbols in the memory 303;
- compare at least one subset of consecutive stored strings to identify the variable key based on a predefined algorithm;
- extract the string containing the piece of information by deleting the characters or symbols that constitute the key as identified by at least one of the stored strings;
- show on the display 403 the string containing the piece of information.

According to an improvement with increased security shown in fig. 6, there may be a remote server 4 which both the generating terminal 2 and the validation terminal 3 are or can be connected to. The server 4 contains the list of issued securities to be validated. The generating terminal 2 is designed to receive a security from the server 4 to generate a corresponding dynamic bar code, the control unit of the validation terminal 3 being configured to:
read the dynamic code outputted by the generating terminal 2;
decode the security;
validate the security by verifying that it is on the server 4;
nullify the validated security on the server 4.

According to a particularly advantageous embodiment, the validation terminal of the system according to the invention is a POS, an ATM or in any case an apparatus able to perform a financial transaction with the generating terminal acting as a bank card for carrying out said transaction.

Although the description mostly refers to two-dimensional codes of QR-Code type, the teachings of the present invention can be applied to any type of code. For example, the use of bar codes of one-dimensional type or two-dimensional codes of the most various types can be provided, such as the PDF-417 code created by Symbol Technologies Inc. in 1989, color codes in which the information contained therein is encoded by using combinations of basic color red, green and yellow, Data Matrix code, iClickGo, code 49, code 16k, Maxi code, Code one, Veri code, CodaBlack (MCL-2D), ArrayTag, Philips Dot code, Soft, strip code and the like. All this, without abandoning the informative principle described above and subsequently claimed.

The invention is defined by the appended claims.

## Claims

1. A dynamic graphic code, representing, in encoded manner, a security,
- said security being formed by a sequence of alphanumeric characters and/or symbols,
**characterized in that**
- said dynamic graphic code consisting in a timely sequence of graphic codes to be provided on a display (502),
- each graphic code of the sequence being a bar code or QR code containing information,
- said information contained in each graphic code of the said sequence comprises a fixed part and a variable part,
- each variable part being time dependent,
- each variable part is encoded together with the respective fixed part thereby forming said sequence of different graphic codes,
- each fixed part contains said security,
- each fixed part can be determined by comparing two or more subsequent codes of the said sequence of graphic codes.

2. Dynamic graphic code according to claim 1, **characterized in that** each graphic code of the sequence is a two-dimensional QR code.

3. Generating device (2) being configured to generate a dynamic graphic code according to one or more of the preceding claims,
the device (2) comprising
- an input (302) for reading a security to be encoded,
- a generating unit (802) for generating a dynamic key,
- said generating unit (802) comprising, or being interfaced with, a counter or a timer (702),
- said counter or said timer (702) being configured to generate said time dependent variable part,
- said time dependent variable part forming said dynamic key, the device (2) further comprising
- an encoding unit (902) for encoding the security with said dynamic key into said sequence of graphic codes,
- a display (502) for displaying said sequence of graphic codes.

4. Generating device (2) according to claim 3, wherein
- the security comprises a sequence of fixed characters or symbols,
and
- each variable part comprises a sequence of characters or symbols being variable over time,
- the dynamic graphic codes representing in encoded manner a string comprising the sequence of characters or symbols of the security and the characters or symbols of each variable part which are arranged at predefined positions with respect to each other.

5. Authentication device (3) for reading a dynamic graphic code according to one or more of preceding claims 1 or 2 the device comprising:
- a bar code reader (203);
- a memory (303) for storing code sequences and/or strings;
- a control unit (103);
- an output unit (403) to output the decoded information,
**characterized in that** the control unit (103) is configured to:
- receive code sequences read by the bar code reader (203);
- decode information contained in each of said code sequences, said information comprising a fixed part and a variable part, said variable part forming a dynamic key;
- store said decoded information as strings of characters or symbols in the memory (303);
- compare at least one subset of consecutive ones of said stored strings in order:
- to identify said dynamic key based on a predefined algorithm;
and
- to extract said fixed part by deleting the characters or symbols that constitute said dynamic key as identified by at least one of the stored strings, said fixed part being a string of characters or symbols containing a security;
- display at the output unit (403) the string containing the security.

6. Device according to one or more of preceding claims 3 to 5 wherein said dynamic key is a key for an encryption algorithm which is adapted to encrypt said security into said sequence of graphic codes.

7. System for generating and authenticating a security represented by a sequence of alphanumeric characters and/or symbols, the system comprising
- a generating device (2) according to claim 3 or 4, and
- an authentication device (3) according to claim 5.

8. System according to claim 7, wherein
- the authentication device (3) is a smartphone, a tablet, a personal computer or a POS;
- the bar code reader (203) is configured to read the bar codes presented to the authentication device (3).

9. System according to claim 7 or 8, the system further comprising:
- a remote server (4), wherein
- the generating device (2) and the authentication device (3) are connected or connectable to the server (4),
- the server (4) contains a list of securities issued to be validated,
- the generating device (2) is configured to receive a security from the server (4) in order to generate a corresponding dynamic graphic code,
- the control unit (103) of the authentication device (3) is configured to:
- receive the dynamic graphic code read by the bar code reader (203) when being presented by the generating device (2);
- validate the security by verifying that it is on the server;
- nullify the validated security on the server (4) .

10. Method for generating a dynamic graphic code representing, in encoded manner, a security formed by a sequence of alphanumeric characters and/or symbols, the method comprising the following steps:
- receiving a security from a providing institution;
- reading the sequence of the characters or symbols forming the security;
- generating a dynamic key variable over time according to a predetermined algorithm;
- generating strings comprising the sequence of both the characters or symbols of the security and the characters or symbols of the dynamic key arranged at predefined positions with respect to each other;
- encoding the strings into a sequence of two-dimensional bar codes.

11. Method according to claim 10, **characterized by** further comprising an authentication step, said authentication step comprising the steps of:
- receiving said code sequences of two-dimensional bar codes from a bar code reader (203);
- decoding information contained in each of said code sequences, said information comprising a fixed part and a variable part, said variable part forming a dynamic key;
- storing said decoded information as strings of characters or symbols in a memory (303);
- comparing at least one subset of consecutive ones of said stored strings in order:
- to identify said dynamic key based on a predefined algorithm;
- to extract said fixed part by deleting the characters or symbols that constitute said dynamic key as identified by at least one of the stored strings, said fixed part being a string of characters or symbols containing a security;
- display at an output unit (403) the string containing the security.

12. Method according to claim 11, comprising a security validation step.

## Patentansprüche

1. Dynamischer graphischer Code, der in kodierter Form eine Sicherheit darstellt,
- wobei die Sicherheit durch eine Folge von alphanumerischen Zeichen und/oder Symbolen gebildet wird,
**dadurch gekennzeichnet, dass**
- der dynamische grafische Code aus einer zeitlichen Sequenz von auf einer Anzeige (502) bereitzustellenden grafischen Codes besteht,
- wobei jeder grafische Code der Sequenz ein Informationen enthaltender Strichcode oder QR-Code ist,
- die in jedem graphischen Code der Sequenz enthaltene Information einen festen Teil und einen variablen Teil umfasst,
- jeder variable Teil zeitabhängig ist,
- jeder variable Teil zusammen mit dem jeweiligen festen Teil kodiert ist und dadurch die Sequenz von verschiedenen graphischen Codes bildet,
- jeder feste Teil die besagte Sicherheit enthält,
- jeder feste Teil kann durch den Vergleich von zwei oder mehreren aufeinanderfolgenden Codes der besagten Sequenz von graphischen Codes bestimmt werden.

2. Dynamischer grafischer Code nach Anspruch 1, **dadurch gekennzeichnet, dass** jeder grafische Code der Sequenz ein zweidimensionaler QR-Code ist.

3. Erzeugungsvorrichtung (2), die zum Erzeugen eines dynamischen graphischen Codes nach einem oder mehreren der vorhergehenden Ansprüche konfiguriert ist,
wobei die Vorrichtung (2) umfasst
- einen Eingang (302) zum Lesen einer zu kodierenden Sicherheit,
- eine Erzeugungseinheit (802) zum Erzeugen eines dynamischen Schlüssels,
- wobei die Erzeugungseinheit (802) einen Zähler oder einen Zeitgeber (702) umfasst oder mit diesem über eine Schnittstelle verbunden ist,
- wobei der Zähler oder der Zeitgeber (702) zum Erzeugen des zeitabhängigen variablen Teils konfiguriert ist,
- wobei der zeitabhängige variable Teil den dynamischen Schlüssel bildet,
wobei die Vorrichtung (2) ferner umfasst
- eine Kodiereinheit (902) zum Kodieren der Sicherheit mit dem dynamischen Schlüssel in die besagte Folge von graphischen Codes,
- eine Anzeige (502) zum Anzeigen der besagten Sequenz von graphischen Codes.

4. Erzeugungsvorrichtung (2) nach Anspruch 3, wobei
- die Sicherheit eine Sequenz von festen Zeichen oder Symbolen umfasst,
und
- jeder variable Teil eine Sequenz von über die Zeit variablen Zeichen oder Symbolen umfasst,
- wobei die dynamischen grafischen Codes in kodierter Weise eine Zeichenkette darstellen, die die Sequenz von Zeichen oder Symbolen der Sicherheit und die Zeichen oder Symbole jedes variablen Teils umfasst, die an vordefinierten Positionen in Bezug zueinander angeordnet sind.

5. Authentifizierungsvorrichtung (3) zum Lesen eines dynamischen graphischen Codes nach einem oder mehreren der vorhergehenden Ansprüche 1 oder 2, wobei die Vorrichtung Folgendes umfasst:
- einen Strichcodeleser (203);
- einen Speicher (303) zum Speichern von Codesequenzen und/oder Zeichenketten,
- eine Steuereinheit (103);
- eine Ausgabeeinheit (403) zum Ausgeben der dekodierten Informationen,
**dadurch gekennzeichnet, dass** die Steuereinheit (103) konfiguriert ist, zum:
- Empfangen von Codesequenzen, die von dem Strichcodeleser (203) gelesen werden;
- Dekodieren von Informationen, die in jeder der Codesequenzen enthalten sind, wobei die Informationen einen festen Teil und einen variablen Teil umfassen, wobei der variable Teil einen dynamischen Schlüssel bildet;
- Speichern der dekodierten Informationen als Ketten von Zeichen oder Symbolen in dem Speicher (303);
- Vergleichen von mindestens einer Untergruppe von aufeinanderfolgenden gespeicherten Zeichenketten um:
- den dynamischen Schlüssel basierend auf einem vordefinierten Algorithmus zu identifizieren;
und
- den festen Teil zu extrahieren durch Löschen der den dynamischen Schlüssel bildenden Zeichen oder Symbole, wie sie durch mindestens eine der gespeicherten Zeichenketten identifiziert werden, wobei der feste Teil eine Zeichenkette von eine Sicherheit enthaltenden Zeichen oder Symbolen ist;
- Anzeigen der die Sicherheit enthaltenden Zeichenkette an der Ausgabeeinheit (403).

6. Vorrichtung nach einem oder mehreren der vorhergehenden Ansprüche 3 bis 5, wobei der dynamische Schlüssel ein Schlüssel für einen Verschlüsselungsalgorithmus ist, der geeignet ist, die Sicherheit in die Sequenz von graphischen Codes zu verschlüsseln.

7. System zum Erzeugen und Authentifizieren einer Sicherheit, die durch eine Sequenz von alphanumerischen Zeichen und/oder Symbolen dargestellt ist, wobei das System umfasst
- eine Erzeugungsvorrichtung (2) nach Anspruch 3 oder 4, und
- eine Authentifizierungsvorrichtung (3) nach Anspruch 5.

8. System nach Anspruch 7, wobei
- die Authentifizierungsvorrichtung (3) ein Smartphone, ein Tablet, ein Personal Computer oder ein POS ist;
- der Strichcodeleser (203) zum Lesen der der Authentifizierungsvorrichtung (3) bereitgestellten Strichcodes konfiguriert ist.

9. System nach Anspruch 7 oder 8, wobei das System ferner umfasst:
- einen Remote-Server (4),
wobei
- die Erzeugungsvorrichtung (2) und die Authentifizierungsvorrichtung (3) mit dem Server (4) verbunden oder verbindbar sind,
- der Server (4) eine Liste der zur Validierung ausgegebenen Sicherheiten enthält,
- die Erzeugungsvorrichtung (2) zum Empfangen einer Sicherheit von dem Server (4) konfiguriert ist, um einen entsprechenden dynamischen grafischen Code zu erzeugen,
- die Steuereinheit (103) der Authentifizierungsvorrichtung (3) konfiguriert ist, um
- den von dem Strichcodeleser (203) gelesenen dynamischen grafischen Code zu empfangen, wenn er von der Erzeugungsvorrichtung (2) bereitgestellt wird, und um
- die Sicherheit zu validieren, indem verifiziert wird, dass sie im Server vorliegt, und um
- die validierte Sicherheit im Server (4) zu annullieren.

10. Verfahren zur Erzeugung eines dynamischen graphischen Codes, der in kodierter Weise eine Sicherheit darstellt, die aus einer Sequenz von alphanumerischen Zeichen und/oder Symbolen besteht, wobei das Verfahren die folgenden Schritte umfasst:
- Erhalten einer Sicherheit von einer anbietenden Institution;
- Lesen der Sequenz der die Sicherheit bildenden Zeichen oder Symbole;
- Erzeugen eines zeitvariablen dynamischen Schlüssels nach einem vorgegebenen Algorithmus;
- Erzeugen von Zeichenketten, die die Sequenz sowohl der Zeichen oder Symbole der Sicherheit als auch der Zeichen oder Symbole des dynamischen Schlüssels umfassen, die an vordefinierten Positionen in Bezug aufeinander angeordnet sind;
- Kodieren der Zeichenketten in eine Sequenz von zweidimensionalen Strichcodes.

11. Verfahren nach Anspruch 10, **dadurch gekennzeichnet, dass** es ferner einen Authentifizierungsschritt umfasst, wobei der Authentifizierungsschritt die folgenden Schritte umfasst:
- Empfangen der besagten Codesequenzen von zweidimensionalen Strichcodes von einem Strichcodeleser (203);
- Dekodieren der in jeder der Codesequenzen enthaltenen Informationen, wobei die Informationen einen festen Teil und einen variablen Teil umfassen, wobei der variable Teil einen dynamischen Schlüssel bildet;
- Speichern der dekodierten Informationen als Ketten von Zeichen oder Symbolen in einem Speicher (303);
- Vergleichen von mindestens einer Untergruppe von aufeinanderfolgenden gespeicherten Zeichenketten um:
- den dynamischen Schlüssel basierend auf einem vordefinierten Algorithmus zu identifizieren;
- den festen Teil zu extrahieren durch Löschen der den dynamischen Schlüssel bildenden Zeichen oder Symbole, wie sie durch mindestens eine der gespeicherten Zeichenketten identifiziert werden, wobei der feste Teil eine Zeichenkette von eine Sicherheit enthaltenden Zeichen oder Symbolen ist;
- Anzeigen der die Sicherheit enthaltenden Zeichenkette an der Ausgabeeinheit (403).

12. Verfahren nach Anspruch 11, umfassend einen Sicherheitsvalidierungsschritt.

## Revendications

1. Un code graphique dynamique représentant, de manière encodée, une sécurité,
- ladite sécurité étant formée par une séquence de caractères alphanumériques et/ou de symboles, **caractérisé en ce que**
- ledit code graphique dynamique consiste en une séquence temporelle de codes graphiques à fournir sur un affichage (502),
- chaque code graphique de la séquence étant un code-barres ou un code QR contenant des informations,
- lesdites informations contenues dans chaque code graphique de ladite séquence comprenant une partie fixe et une partie variable,
- chaque partie variable étant dépendante du temps,
- chaque partie variable est encodée avec la partie fixe respective, formant ainsi ladite séquence de différents codes graphiques,
- chaque partie fixe contient ladite sécurité,
- chaque partie fixe peut être déterminée en comparant deux ou plusieurs codes subséquents de ladite séquence de codes graphiques.

2. Code graphique dynamique selon la revendication 1, **caractérisé en ce que** chaque code graphique de la séquence est un code QR bidimensionnel.

3. Dispositif de génération (2) étant configuré pour générer un code graphique dynamique selon l'une ou plusieurs des revendications précédentes, le dispositif (2) comprenant
- une entrée (302) de lecture d'une sécurité à encoder,
- une unité de génération (802) pour générer une clé dynamique,
- ladite unité de génération (802) comprenant, ou étant interfacée avec, un compteur ou un temporisateur (702),
- ledit compteur ou ledit temporisateur (702) étant configuré pour générer ladite partie variable dépendante du temps,
- ladite partie variable dépendante du temps formant ladite clé dynamique, le dispositif (2) comprenant en outre
- une unité d'encodage (902) pour coder la sécurité avec ladite clé dynamique dans ladite séquence de codes graphiques,
- un affichage (502) pour afficher ladite séquence de codes graphiques.

4. Dispositif de génération (2) selon la revendication 3, dans lequel
- la sécurité comprend une séquence de caractères ou de symboles fixes, et
- chaque partie variable comprenant une séquence de caractères ou de symboles étant variables dans le temps,
- les codes graphiques dynamiques représentant, de manière codée, une chaîne comprenant la séquence de caractères ou de symboles de la sécurité et les caractères ou les symboles de chaque partie variable qui sont disposés à des positions prédéfinies entre eux.

5. Dispositif d'authentification (3) de lecture d'un code graphique dynamique selon l'une ou plusieurs des revendications 1 ou 2, le dispositif comprenant:
- un lecteur de code-barres (203);
- une mémoire (303) pour mémoriser des séquences et/ou des chaînes de code;
- une unité de commande (103);
- une unité de sortie (403) pour émettre les informations décodées,
**caractérisé en ce que** l'unité de commande (103) est configurée pour:
- recevoir des séquences de code lues par le lecteur de code-barres (203);
- décoder des informations contenues dans chacune desdites séquences de code, lesdites informations contenant une partie fixe et une partie variable, ladite partie variable formant une clé dynamique;
- mémoriser lesdites informations décodées sous forme de chaînes de caractères ou de symboles dans la mémoire (303);
- comparer au moins un sous-ensemble de chaînes consécutives desdites chaînes mémorisées de sorte à:
- identifier ladite clé dynamique en fonction d'un algorithme prédéfini;
et
- extraire ladite partie fixe en supprimant les caractères ou les symboles constituant ladite clé dynamique telle qu'identifiée par au moins une des chaînes mémorisées, ladite partie fixe étant une chaîne de caractères ou de symboles contenant une sécurité;
- afficher la chaîne contenant la sécurité sur l'unité de sortie (403).

6. Dispositif selon l'une ou plusieurs des revendications précédentes 3 à 5, dans lequel ladite clé dynamique est une clé pour un algorithme de cryptage qui est adapté pour crypter ladite sécurité dans ladite séquence de codes graphiques.

7. Système de génération et d'authentification d'une sécurité représentée par une séquence de caractères alphanumériques et/ou de symboles, le système comprenant
- un dispositif de génération (2) selon la revendication 3 ou 4, et
- un dispositif d'authentification (3) selon la revendication 5.

8. Système selon la revendication 7, dans lequel
- le dispositif d' authentification (3) est un smartphone, une tablette, un ordinateur personnel ou un POS;
- le lecteur de code-barres (203) est configuré pour lire les codes-barres présentés au dispositif d'authentification (3).

9. Système selon la revendication 7 ou 8, le système comprenant en outre:
- un serveur à distance (4), dans lequel
- le dispositif de génération (2) et le dispositif d'authentification (3) sont connectés ou peuvent être connectés au serveur (4),
- le serveur (4) contient une liste de sécurités émises à valider,
- le dispositif de génération (2) est configuré pour recevoir une sécurité du serveur (4) de sorte à générer un code graphique dynamique correspondant,
- l'unité de commande (103) du dispositif d'authentification (3) est configurée pour:
- recevoir le code graphique dynamique lu par le lecteur de code-barres (203) lorsqu'il est présenté par le dispositif de génération (2);
- valider la sécurité en vérifiant qu'elle est sur le serveur;
- annuler la sécurité validée sur le serveur (4).

10. Méthode de génération d'un code graphique dynamique représentant, de manière encodée, une sécurité formée par une séquence de caractères alphanumériques et/ou de symboles, la méthode comprenant les étapes suivantes:
- recevoir une sécurité d'un organisme émetteur;
- lire la séquence des caractères ou des symboles formant la sécurité;
- générer une clé dynamique variable dans le temps selon un algorithme prédéfini;
- générer des chaînes comprenant la séquence à la fois des caractères ou des symboles de la sécurité et des caractères ou symboles de la clé dynamique disposés à des positions prédéfinies entre eux;
- encoder les chaînes dans une séquence de codes-barres bidimensionnels.

11. Méthode selon la revendication 10, **caractérisée en ce qu'**elle comprend en outre une étape d'authentification, ladite étape d'authentification comprenant les étapes de:
- recevoir ledit séquences de code des codes-barres bidimensionnels à partir d'un lecteur de code-barres (203);
- décoder des informations contenues dans chacune desdites séquences de code, lesdites informations contenant une partie fixe et une partie variable, ladite partie variable formant une clé dynamique;
- mémoriser lesdites informations décodées sous forme de chaînes de caractères ou de symboles dans une mémoire (303);
- comparer au moins un sous-ensemble de chaînes consécutives desdites chaînes mémorisées de sorte à:
- identifier ladite clé dynamique en fonction d'un algorithme prédéfini;
- extraire ladite partie fixe en supprimant les caractères ou les symboles constituant ladite clé dynamique telle qu'identifiée par au moins une des chaînes mémorisées, ladite partie fixe étant une chaîne de caractères ou de symboles contenant une sécurité;
- afficher la chaîne contenant la sécurité sur une unité de sortie (403).

12. Méthode selon la revendication 11, comprenant une étape de validation d'une sécurité.
